# EUROPEAN PATENT APPLICATION

(11) **EP 0 679 541 A2**
(43) Date of publication of application: **02.11.1995**
(21) Application number: 95302815.6
(22) Date of filing: 26.04.1995
(51) Int. Cl.: B60B 21/10, B60C 17/04, B60C 17/06

(54) **Rim for use with tire assembly**

(30) Priority: 27.04.1994 JP 90369/94
(71) Applicant: Nishi, Masaaki, Nagoya-shi, Aichi-ken (JP)
(72) Inventor: Nishi, Masaaki, Nagoya-shi, Aichi-ken (JP)
(74) Representative: Beresford, Keith Denis Lewis

(57) **Abstract**

A light-weight, low-cost, and easy-to-manufacture rim (10) for use with a tire assembly capable of realizing stable high-speed traveling with a flat tire and an extended continuous travel distance. A rim includes flanges (11), bead seats (12), and a support section (13) integrally formed together with the flanges and the bead seats. The support section (13) is made up of a pair of legs (14) extending radially outside from the inner sides of the bead seats, and a tire receiving section (15) connecting between the tip ends of the pair of legs. A space between the legs is opened radially on the inside of the rim.

## Description

### BACKGROUND OF THE INVENTION

### 1. Field of the Invention

This invention relates to a rim for use with a tire assembly which permits stable traveling even after a tire has been puncture (hereinafter called as traveling with a flat tire).

### 2. Description of the Prior Art

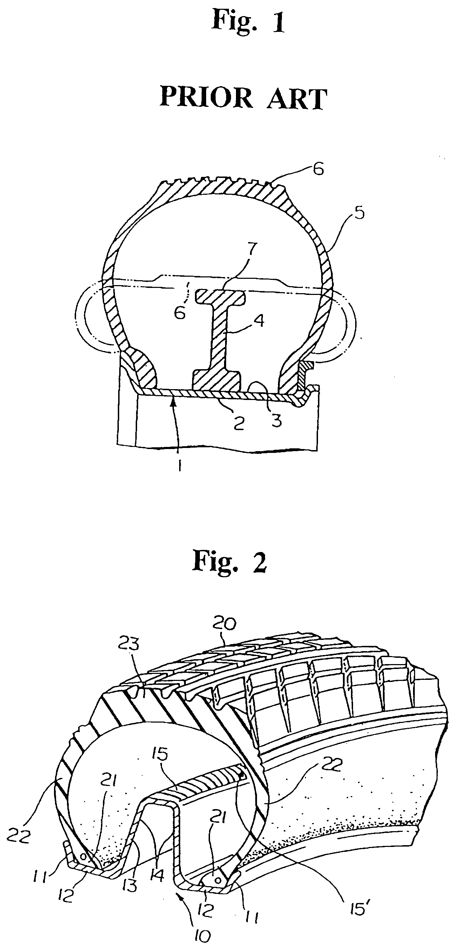

Conventionally, as regards a rim for use with a tire assembly for stabilizing traveling when a tire is punctured, a number of techniques have been put forward wherein an inner ring assembly, attached to the outer peripheral surface of a well section of the rim, supports a crown portion of a tire from the inside thereof when traveling with a flat tire. One example of these techniques is shown in Fig. 1. An inner ring assembly 4 having an I-shaped cross section is attached to an outer peripheral surface 3 of a well section 2 of a rim 1 for use with a tire assembly. When a tire is punctured, the inner ring assembly 4 supports a crown portion 6 of a tire rubber 5 from the radial insider thereof. The inner ring assembly 4 is fixed to the outer peripheral surface 3 of the well section 2 by means of welding, bolting, or the like.

In the case of the previously mentioned rim, it is necessary for the inner ring assembly 4 to possess a considerable load supporting force in order to endure high-speed traveling when traveling with a flat tire. For this reason, it is necessary to use a large inner ring assembly having a high strength. Moreover, it is necessary to use a plurality of fixing bolts to strengthen the fixing of the inner ring assembly to the rim 1, thereby leading to an increased weight, an increased cost due to the increased number of parts, and low production efficiency.

Particularly in the case of high-speed traveling, it is essential that the center of the rim 1 is matched to the center of the tire rubber 5 in order to effect stable traveling.

However, it is necessary to use the center ring assembly 4 having a wide outer periphery support surface 7 particularly in order to support the tire 5 radially stably with respect to the rim 1. This makes the previously mentioned problem more significant.

### BRIEF SUMMARY OF THE INVENTION

In view of the foregoing problems in the art, the object of the present invention is to provide a light-weight, low-cost, and easy-to-manufacture rim for use with a tire assembly which permits high-speed stable traveling and an extended continuous travel distance when traveling with a flat tire.

According to one aspect of the present invention, the above mentioned object is achieved by a rim for use with a tire assembly comprising:
a pair of bead seats along which beads of a tire are engageably positioned;
a pair of flanges, each being formed along each outer side of the pair of bead seats; and
a support section, both sides thereof being integrally connected respectively to both inner sides of the pair of bead seats, being provided so as to project radially outside relative to the bead seats, the support section supporting a crown portion of a tire from the inside thereof when the internal pressure of the tire drops.

With this arrangement, the load acting on the support section is distributed onto, and supported by, the entire rim.

According to this embodiment, the flanges, the bead seats and the support section are integrated together, and load is efficiently distributed onto, and supported by, the rim, whereby a high load supporting force is achieved. This makes it possible to reduce the weight of the rim as well as to facilitate the manufacture of the rim as a result of the reduction of the number of parts, thereby resulting in a reduced manufacturing cost. The reduction of the weight of the rim also results in suppressed fuel consumption during normal traveling, reduced wear of the tire during traveling with a flat tire, and an extended travel distance as a result of the suppression of frictional heat.

In one preferred embodiment of the present invention, the support section should preferably comprise
a pair of annular legs upwardly extending respectively from the inner annular sides of the bead seats, and being spaced apart from each other; and
an annular tire receiving section connecting between the annular tip ends of the pair of annular legs.

With this arrangement, a load which the tire receiving section experiences is transmitted to the entire rim via the legs, and the load is distributed onto, and supported by, the entire rim.

According to this embodiment, it is easy to form the tire receiving section into a shape favorable for ensuring a contact area between the inner peripheral surface of the crown portion of the tire and the outer peripheral surface of the tire receiving section when traveling with a flat tire. For this reason, it is possible to improve stability and controllability when traveling with a flat tire to a much greater extent.

In another preferred embodiment of the present invention, the tire receiving section should preferably be larger in width than a space formed between the base portions of the pair of legs.

With this arrangement, since the tire receiving section is wider than the space formed between the base portions of the legs, and it is easy to form the rim into a shape which ensures an area enough to support the load.

According to this embodiment, by virtue of the wide tire receiving section, an area enough to support the inner surface of the tire when traveling with a flat tire is ensured. This suppresses the generation of frictional heat as a result of contact between the tire and the support section when traveling with a flat tire, and thus permits traveling with a flat tire at a higher speed and over a longer distance. It is possible to easily adjust the length and width of the support section by respectively adjusting the sizes of the legs and the tire receiving section. In this way, it is easy to design the rim, as well as to efficiently achieve several advantages; namely, reduced weight, reduced manufacturing cost, traveling with a flat tire at an increased speed, and an extended distance of traveling.

In still another embodiment of the present invention, at least the outer peripheral surface of the tire receiving section of the support section should preferably be provided with an elastic cap made of a resilient material by means of coating, adhesion, attachment, or fitting.

With this arrangement, load is transmitted to the tire receiving section via the elastic cap, and hence a load supporting area is ensured by the resilient deformation of the elastic cap, whereby the tire and the tire receiving section are prevented from being damaged by excessive load. Moreover, the tire grips the elastic cap when traveling with a flat tire, so that the tire is prevented from slipping in a widthwise direction thereof.

According to this embodiment, the tire receiving section is provided with the elastic cap, and it is possible to reduce the frictional heat to a much greater extent. In addition, the tire brought into contact with the elastic cap grips the elastic cap, and hence the tire is maintained at an appropriate position while traveling with a flat tire. Therefore, it is possible to attain improved stability at the time of high-speed traveling and traveling along a curve, improved controllability, traveling with a flat tire at a higher speed, and an extended travel distance.

In a further preferred embodiment of the present invention, an engaging recess should preferably be formed in the outer peripheral surface of the tire receiving section, and a projection capable of engaging with the engaging recess should preferably be formed on a surface of the elastic cap which is to be attached to the tire receiving section.

With this arrangement, the elastic cap is fixedly attached to the outer peripheral surface of the tire receiving section, and a gripping force of the tire when traveling with a flat tire is improved. This makes it possible to increase the speed of the traveling with a flat tire and to improve controllability.

According to this embodiment, the elastic cap is fixed to the tire receiving section, and hence a tire gripping force when traveling with a flat tire is improved. It is possible to achieve improved stability at the time of high-speed traveling and traveling along a curve, improved controllability, traveling with a flat tire at a higher speed, and an extended travel distance.

### BRIEF DESCRIPTION OF THE DRAWINGS

Fig. 1 is a cross-sectional view showing a conventional rim for use with a tire assembly;
Fig. 2 is a cross-sectional perspective view showing a rim for use with a tire assembly in a first embodiment of the present invention;
Fig. 3 is a cross-sectional perspective view showing the rim shown in Fig. 2 when traveling with a flat tire;
Fig. 4 is a cross-sectional view showing a modified example of a support section provided in the rim shown in Fig. 2;
Fig. 5 is a cross-sectional view showing another modified example of the support section provided in the rim shown in Fig. 2;
Fig. 6 is a cross-sectional view showing a rim for use with a tire assembly in a second embodiment of the present invention;
Fig. 7 is a cross-sectional view showing a rim for use with a tire assembly in a third embodiment of the present invention;
Fig. 8 is a cross-sectional view showing a modified example of a support section provided in the rim shown in Fig. 7;
Fig. 9 is a cross-sectional view showing another modified example of the support section provided in the rim shown in Fig. 7;
Fig. 10 is a cross-sectional view showing a rim for use with a tire assembly in a fourth embodiment of the present invention;
Fig. 11 is a cross-sectional view showing a rim for use with a tire assembly in a fifth embodiment of the present invention;
Fig. 12 is a cross-sectional view showing a modified example of a tire receiving section provided in the rim shown in Fig. 11;
Fig. 13 is a cross-sectional view showing another modified example of the tire receiving section provided in the rim shown in Fig. 11;
Fig. 14 is a cross-sectional view showing a rim for use with a tire assembly in a sixth embodiment of the present invention; and
Fig. 15 is a cross-sectional view showing a rim for use with a tire assembly in a seventh embodiment of the present invention.

### DETAILED DESCRIPTION OF THE PREFERRED EMBODIMENTS

Referring to Figs. 2 through 5, a rim for use with a tire assembly in a first embodiment of the present invention will now be described.

A tire 20 is attached to a rim 10 for use with a tire assembly. As shown in Fig. 2, the rim 10 is an integrally formed member, and is made up of a pair of flanges 11 and 11; a pair of bead seats 12 and 12, each being connected to the inner side of each of the pair of flanges 11 and 11; and a support section 13 provided so as to project to radially outside with respect to the bead seats 12. The flanges 11, the bead seats 12, and the support section 13 are made of the same metallic material and are integrally formed by means of casting, stamping, powder sinter molding, forging, or the like. In addition to this, they may be integrally formed of the same resin member by injection extrusion molding. A material having a compression modulus of more than 40 Kg/cm2 at a flexure of 3% is preferable for use as a material for the flanges 11, the bead seats 12 and the support section 13. However, the material is not limited to such a metallic material but may be plastic, hard rubber, composite material utilizing, for example, glass fiber or carbon fiber, or the like.

The support section 13 as a whole is integrally formed, and this support section 13 is made up of a pair of legs 14 and 14 radially extending outside the rim 10 from the opposing inner ends of the bead seats 12 and 12; and a tire receiving section 15 that constitutes a ring with the center thereof being aligned to the axis of the rim 10. The tire receiving section 15 is formed so that an interval between the pair of legs 14 and 14 will become progressively narrower from the base portions toward the radially outermost ends thereof; namely, that the support section 13 will be progressively reduced in size radially from the inside to the outside. However, it is not necessary to reduce the size of the support section 13. Moreover, it is preferable to form grooves 15' in the outer peripheral surface of the tire receiving section 15 in order to prevent a tire 20 from slipping when the inner peripheral surface of a crown section 23 is brought into pressed contact with the tire receiving section 15 in the case of a flat tire, whereby wear of the tire resulting from the slippage is reduced. This also results in a damping effect and an enforced gripping force.

The legs 14 and the tire receiving section 15 are integrally formed together with the flanges 11 and the bead seats 12.

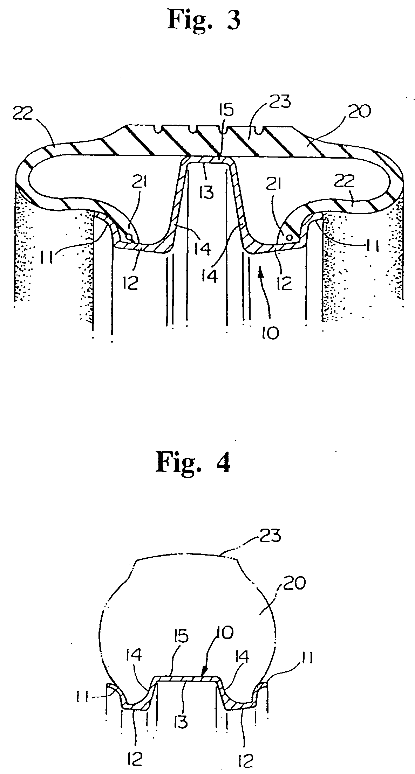

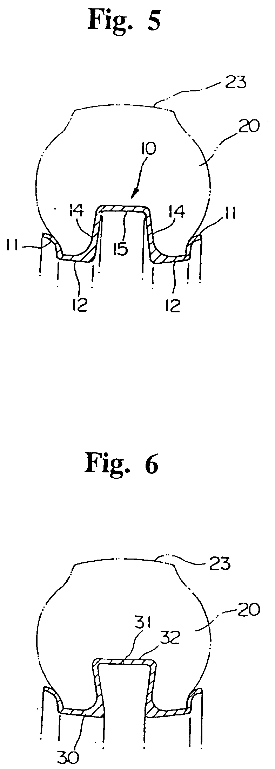

As shown in Figs. 4 and 5, it is possible for the support section 13 to assure stability of traveling (traveling with a flat tire) when the internal pressure of the tire 20 drops, according to the shape of the tire 20 and the weight of a vehicle to which a tire assembly consisting of the rim 10 and the tire 20 is attached. This is achieved by adjusting a degree of a radial projection of the support section 13 with respect to the bead seats 12, and widths of the base portions of the legs 14 and the tire receiving section 15 in response to compression of the tire 20.

The tire 20 is made up of beads 21 and 21 to be loaded onto the bead seats 12; side walls 22 and 22 radially extending from the beads 21 and 21 to the outside; and the crown section 23 connecting between the outer radial ends of the side walls 22 and 22.

Because of the rim 10, if the internal pressure of the tire 20 drops, the tire 20 will flatten in the radial direction. As shown in Fig. 3, the outer peripheral surface of the tire receiving section 15 will come into contact with the inner surface of the crown section 23, and the radius of rotation of the tire 20 is prevented from reducing beyond the tire receiving section 15. At this time, the support section 13 experiences load as a result of the tire receiving section 15 coming into contact with the inner peripheral surface of the crown section 23. This load is distributed onto, and supported by, the bead seats 12 and the flanges 11 via the legs 14 and 14.

Thus, according to the rim 10 of the present invention, the flanges 11, the bead seats 12, and the support section 13 are integrated together, and particularly the tire receiving section 15 is supported by the two legs 14 and 14. Accordingly, the load is efficiently distributed and supported, and a high load supporting force is achieved. For this reason, it is possible to reduce the weight of the rim 10, and it is easy to manufacture the rim 10 because it requires only one part. Thus, the efficiency of production is improved, and eventually a manufacturing cost is reduced. The reduction of the weight of the rim 10 permits the reduction of fuel consumption during normal traveling, the suppression of wear of the tire 20 when traveling with a flat tire, and the extension of a movable distance by virtue of the suppression of frictional heat.

Moreover, the legs 14 and 14 are formed in an inclined manner, and hence it is possible to suppress an effect of the bending moment when traveling along a curve compared with the case where the legs 14 are radially parallel to each other. Also, stability and controllability when traveling with a flat tire are improved.

Referring to Fig. 6, a rim for use with a tire assembly in a second embodiment of the present invention will be described hereunder.

In lieu of the support section 13 of the rim 10 in the first embodiment, a rim 30 for use with a tire assembly in this embodiment is provided with a support section 31. This support section 31 is formed into such a shape as to be progressively larger in axial dimension radially from the inside to the outside. Similarly to the rim 10, the entire rim 30 is integrally formed.

Because of the rim 30, a tire receiving section 32 has a large axial dimension, and a sufficient contact area between the inner peripheral surface of the crown section 23 of the tire 20 and the outer peripheral surface of the support section 31 is ensured when traveling with a flat tire, and therefore it is possible to improve stability and controllability when traveling with a flat tire.

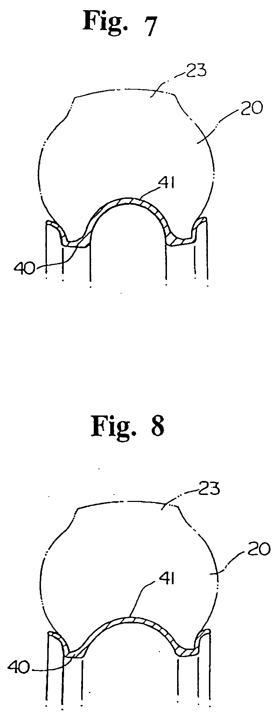

Referring to Figs. 7 through 9, a rim for use with a tire assembly in a third embodiment of the present invention will now be described.

A rim 40 for use with a tire assembly in this embodiment is an integrally formed member. In lieu of the support section 13 of the rim 10 in the first embodiment, the rim 40 has a semi-circular support section 41. The axial center of the support section 41 is situated at the outermost position in a radial direction of the rim 40.

Because of the rim 40, it is constantly ensured that the inner peripheral surface of the crown section 23 is brought into contact with the outer peripheral surface of the support section 41 when traveling with a flat tire. Hence, particularly when traveling along a curve, stable traveling is possible.

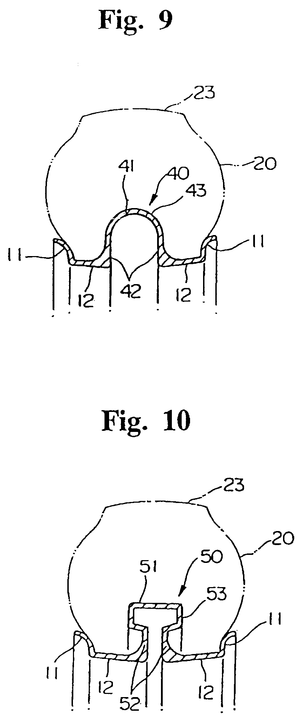

If a radius of curvature of the curve of the support section 41 is changed, it will be possible to appropriately adjust a contact area between the inner peripheral surface of the crown section 23 and the outer peripheral surface of the support section 41, and a degree of the projection of the support section 41 in a radial outside direction of the rim 40.For example, as shown in Fig. 8, the support section 41 may be formed so as to have a large radius of curvature so that a large contact area between the inner peripheral surface of the crown section 23 and the outer peripheral surface of the support section 41 is constantly ensured. Alternatively, as shown in Fig. 9, in the rim 40, the support section 41 may be made up of a pair of legs 42 projecting outside of the rim 40, and a tire receiving section 43 connecting between the tip ends of the legs 42 and 42 and having a cross section bulging radially outside of the rim 40. The outermost end of the support section 41 may be positioned radially outside of the rim 40, so that the radius of rotation of the tire 20 when traveling with a flat tire is increased to a much greater extent.

Referring to Fig. 10, a rim for use with a tire assembly in a fourth embodiment will now be described.

A rim 50 for use with a tire assembly in this embodiment is an integrally formed member. In lieu of the support section 13 of the rim 10 in the first embodiment, the rim 50 has a substantially T-shaped support section 51.

Because of this rim 50, the support section 51 is formed into a substantially T shape by the combination of legs 52 and 52 and a tire receiving section 53. It is easy to freely form the tire receiving section 53 into a shape suitable for supporting the tire 20 when traveling with a flat tire. Therefore, it is possible to improve stability when traveling with a flat tire.

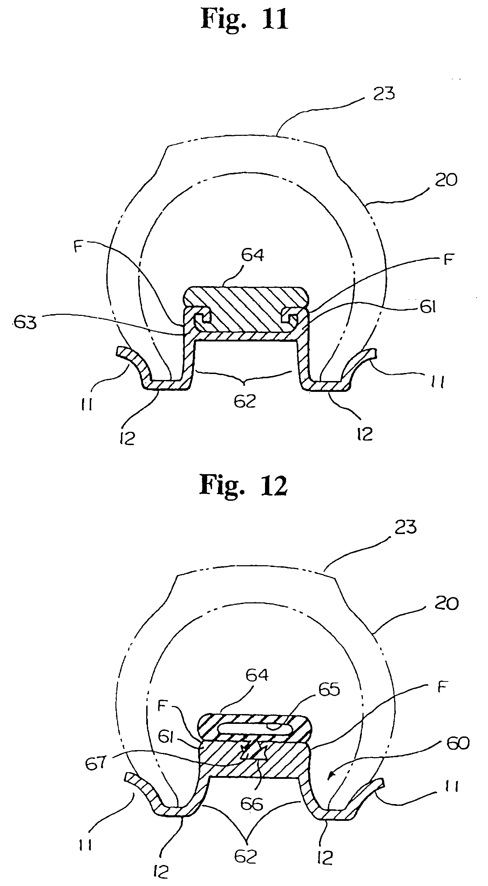

Referring to Figs. 11 through 14, a rim for use with a tire assembly in a fifth embodiment will now be described.

A rim 60 for use with a tire assembly in this embodiment has a support section 61. The entire rim 60 is an integrally formed member, and in lieu of the support section 13 of the rim 10 in the first embodiment, the rim 60 has the support section 61 having a substantially U-shaped cross section, and an elastic cap 64 attached to the support section 61.

The support section 61 is made up of a pair of legs 62 and 62 extending radially outside from the bead seats 12 and 12, and a tire receiving section 63 connecting between the tip ends of the legs 62. The entire support section 61 is formed so as to have a substantially U-shaped cross section. The elastic cap 64 is adhered to the outer peripheral surface of the tire receiving section 63 of the support section 61 by an adhesive or the like.

The tire receiving section 63 is connected to the legs 62 and 62, and is formed so as to have a larger thickness compared with the other portions of the support section 61.

The elastic cap 64 is made of rubber or resin, and covers the entire outer peripheral surface of the tire receiving section 63 so that the inner surface of the tire 20 will be prevented from being damaged when traveling with a flat tire, and that the elastic cap 64 will possess an shock absorbing effect. The inside of the elastic cap 64 is filled with a solid core, and a plurality of slits (not shown) or honeycomb-shaped apertures (not shown) are formed in the outer peripheral surface of the elastic cap 64 in the axial direction of the rim 60. These slits or honeycomb-shaped apertures suppress the generation of heat caused by friction occurring between the inner surface of the tire 20 and the outer peripheral surface of the elastic cap 64 when traveling with a flat tire. A void 65 may be formed at the center of the elastic cap 64, as required. This void 65 is intended to facilitate resilient deformation of the elastic cap 64, as well as to reduce the weight of the rim 60, whereby adhesion between the inner surface of the tire 20 and the outer peripheral surface of the elastic cap 64 is ensured when traveling with a flat tire.

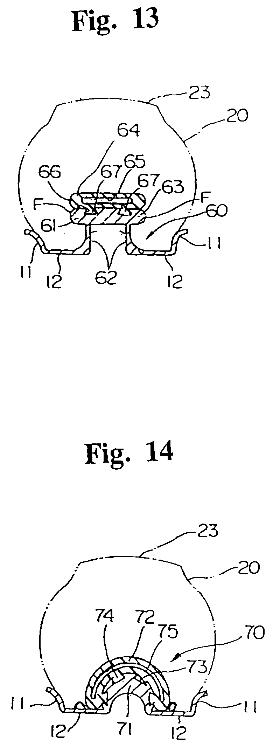

As one method of attaching the elastic cap 64 to the tire receiving section 63, as illustrated in Figs. 12 and 13, an engaging recess 66 is formed in the outer peripheral surface of the tire receiving section 63, and an engaging projection 67 capable of engaging with the engaging recess 66 is also formed on the internal peripheral surface of the elastic cap 64. The engaging projection 67 is engaged with the engaging recess 66, whereby the elastic cap 64 is fixed to the tire receiving section 63. In addition, as can be seen from Fig. 12, small grooves having a substantially V-shaped cross section should preferably be formed in respective tapered portions of the engaging recess 66 in order to prevent the engaging projection 67 from disengaging from the engaging recess 66. In this case, it is ensured that the elastic cap 64 is fixed to a predetermined location on the tire receiving section 63, and it is also possible to prevent slippage or removal of the elastic cap 64 from the tire receiving section 63. Accordingly, the elastic cap 64 is designed to effectively and certainly function even when traveling at a high speed or traveling along a curve. Although the void 65 is filled with air in this embodiment, it may be filled with other packing materials.

In the rim 60, the tire receiving section 63 is formed so as to be wider than an interval between the legs 62 and 62, and hence an area enough to support the inner surface of the tire 20 when traveling with a flat tire is ensured. For this reason, the generation of frictional heat developed as a result of contact between the tire 20 and the support section 61 when traveling with a flat tire is suppressed, and therefore traveling with a flat tire at a higher speed becomes possible. The degree of the radial projection of the support section 61 and the axial dimension of the same are easily adjusted by respectively regulating the sizes of the legs 62 and the tire receiving section 63. Therefore, it is easy to design the rim 60, and it is particularly easy to design the tire rim 60 used in a tire assembly having a smaller compression.

The tire receiving section 63 is provided with the elastic cap 64, and hence it is possible to reduce the frictional heat to a much greater extent. In addition, the tire 20 grips the elastic cap 64 and is maintained at an appropriate position when traveling with a flat tire. Hence, it is possible to improve stability while traveling with a flat tire at a high speed or traveling along a curve, as well as to extend a continuous travel distance.

Referring to Fig. 14, a rim for use with a tire assembly in a sixth embodiment of the present invention will now be described.

A rim 70 for use with a tire assembly in this embodiment has a support section 71. The entire rim 70 is integrally formed. In lieu of the support section 13 of the rim 10 in the first embodiment, the rim 70 has the support section 71 and an elastic cap 72 attached to the support section 71.

The rim 70 has a substantially semi-circular support section 71 bulging radially outside of the rim 70, and sides of the rim 70 are respectively connected to inner sides of the opposing bead seats 12 and 12. A plurality of engaging recesses 73 are formed in the outer peripheral surface of the support section 71 for engageably supporting the elastic cap 72.

The elastic cap 72 is warped along the outer peripheral surface of the support section 71, and a plurality of engaging projections 74 capable of engaging with the engaging recesses 73 are formed in the internal peripheral surface of the elastic cap 72. The engaging projections 74 are respectively engaged with the engaging recesses 73, whereby the elastic cap 72 is attached to the support section 71. A plurality of slits (not shown) are formed in the outer peripheral surface of the elastic cap 72 so as to be parallel to the axial direction of the rim 70. A void 75 is formed at the center of the elastic cap 72, so that the resilient deformation of the elastic cap 72 is facilitated, and the weight of the same is reduced. In this way, adhesion between the elastic cap 72 and the inner surface of the tire 20 is ensured when traveling with a flat tire.

According to the rim 70 in this embodiment, the load acting on the rim 70 from the crown section 23 is supported by the support section 71, via the elastic cap 72, which is entirely warped into a shape suitable for supporting the load. It is possible to stably support the load, acting on the crown section 23 when traveling with a flat tire, irrespective of the direction thereof. Still, by virtue of the elastic cap 72, the crown section 23 is stably maintained at a predetermined location, and hence it is possible to improve stability and controllability of traveling to a much greater extent, as well as to extend a continuous travel distance when traveling with a flat tire to a much greater extent.

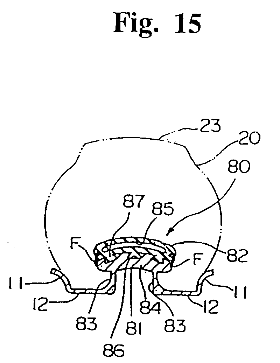

Referring to Fig. 15, a rim for use in a tire assembly in a seventh embodiment of the present invention will now be described.

A rim 80 for use in a tire assembly in this embodiment has a support section 81. The entire rim 80 is integrally formed and is provided with the support section 81 and an elastic cap 82 attached to the support section 81 in lieu of the support section 13 of the rim 10 in the first embodiment.

The rim 80 is integrally formed together with the flanges 11 and the bead seats 12, and is made up of a pair of legs 83 and 83 extending radially outside from the bead seats 12 and 12, and a tire receiving section 84 connecting between the tip ends of the legs 83 and 83.

The tire receiving section 84 is wide so as to project beyond the interval between the legs 83 and 83 when viewed in cross section. The widthwise center of the tire receiving section 84 is shaped into a circular arc so as to bulge radially outside of the rim 80. The tire receiving section 84 is also formed to have an increased thickness when compared with other portions of the support section 81. Moreover, the widthwise sides of the tire receiving section 84 are formed into warped faces F so as not to damage the inner surface of the tire 20.

The entire outer peripheral surface of the tire receiving section 84 is covered with the elastic cap 82 so as not to damage the inner surface of the tire 20 when traveling with a flat tire. A plurality of slits (not shown) are formed, in the outer peripheral surface of the elastic cap 82, in the axial direction of the rim 80, whereby the generation of heat caused by friction occurring between the inner surface of the tire 20 and the elastic cap 82 when traveling with a flat tire is suppressed. A void 85 is formed at the center of the elastic cap 82, so that resilient deformation, and reduction in weight of the elastic cap 82 are facilitated. Thus, adhesion between the inner surface of the tire 20 and the elastic cap 82 is ensured when traveling with a flat tire. If the elastic cap 82 has a solid core and does not have the void 85, recesses and projections are engaged with each other so long as small recesses or projections are formed in a part of the surface of the elastic cap 82 which is to come into contact with the tire 20, and projections or recesses are also formed in a part of the surface of the tire 20 which is to come into contact with the elastic cap 82. The engagement between the projections and the recesses alleviates the generation of frictional heat, whereby traveling with a flat tire can be extended to much a greater extent. In this case, a pattern equal or similar to a tread pattern may be formed on both contact surfaces in consideration of correspondence to, or consistency in, the tread pattern of a tread section.

Moreover, a plurality of engaging recesses 86 formed in the outer surface side of the tire receiving section 84 are fitted to, and engaged with, engaging projections 87 formed on the internal peripheral surface of the elastic cap 82 in a projecting manner, whereby the elastic cap 82 is fixed to the outer surface side of the tire receiving section 84.

Because of the rim 80, the load acting on the rim 80 from the crown section 23 is supported by the tire receiving section 84, via the elastic cap 82, which is formed into a shape suitable for supporting the load. Hence, it is possible to stably support the load, acting on the crown 23 when traveling with a flat tire, irrespective of the direction thereof. In addition, the crown section 23 is stably maintained at a predetermined location by means of the elastic cap 82, whereby stability of traveling can be improved. In the rim 80, the support section 81 bulges radially outside, and hence the rim 80 possesses a high degree of freedom of design. Hence, the rim 80 can be formed into a shape suitable for supporting load when traveling with a flat tire. It is possible to achieve stable traveling, improved controllability, and an extended continuous travel distance when traveling with a flat tire.

Throughout the embodiments described in this specification, the shape of the support section is not limited to the illustrated shapes so long as the rim is an integrally formed member.

Moreover, an air pressure sensor may be housed in the rim.

Several embodiments of the invention have now been described in detail. It is to be noted, however, that these descriptions of specific embodiments are merely illustrative of the principles underlying the inventive concept. It is contemplated that various modifications of the disclosed embodiments, as well as other embodiments of the invention will, without departing from the spirit and scope of the invention, be apparent to persons skilled in the art.

## Claims

1. A rim for use with a tire assembly comprising:
a pair of bead seats along which beads of a tire are engageably positioned;
a pair of flanges, each being formed along each outer side of the pair of bead seats; and
a support section, both sides thereof being integrally connected respectively to both inner sides of the pair of bead seats, being provided so as to project radially outside relative to the bead seats, the support section supporting a crown portion of a tire from the inside thereof when the internal pressure of the tire drops.

2. A rim according to claim 1, wherein the support section comprises
a pair of annular legs upwardly extending respectively from the inner annular sides of the bead seats, and being spaced apart from each other; and
an annular tire receiving section connecting between the annular tip ends of the pair of annular legs.

3. A rim according to claim 1 or 2, wherein the tire receiving section is larger in width than a space formed between the base portions of the pair of legs.

4. A rim according to claim 1, 2 or 3, wherein at least the outer peripheral surface of the tire receiving section of the support section is provided with an elastic cap made of a resilient material by means of coating, adhesion, attachment, or fitting.

5. A rim according to claim 4, wherein an engaging recess is formed in the outer peripheral surface of the tire receiving section, and a projection capable of engaging with the engaging recess is formed on a surface of the elastic cap which is to be attached to the tire receiving section.

6. A rim for use with a tire assembly in which a support section for supporting a tire away from the rim when the pressure insude the tire drops is integrally formed with the rim.

7. A tire assembly having a rim in accordance with any one of claims 1 to 6.
